(19) Europäisches Patentamt
European Patent Office
Office européen des brevets

(11) Veröffentlichungsnummer: **0 131 127**
**B1**

(12) # EUROPÄISCHE PATENTSCHRIFT

(45) Veröffentlichungstag der Patentschrift: **05.11.86**

(51) Int. Cl.⁴: **C 25 D 13/06**, C 08 G 59/42, C 08 F 22/14, C 08 F 22/32

(21) Anmeldenummer: **84106050.2**

(22) Anmeldetag: **28.05.84**

(54) **Verfahren zur Herstellung von Vernetzungskomponenten für Lackbindemittel.**

(30) Priorität: **11.07.83 AT 2531/83**

(43) Veröffentlichungstag der Anmeldung: **16.01.85 Patentblatt 85/3**

(45) Bekanntmachung des Hinweises auf die Patenterteilung: **05.11.86 Patentblatt 86/45**

(84) Benannte Vertragsstaaten: **BE DE FR GB IT SE**

(56) Entgegenhaltungen:
**EP-A-0 082 291**
**US-A-3 654 239**

**CHEMICAL ABSTRACTS, Band 94, 1981, Seite 623, Nr. 217646r, Columbus, Ohio, US;**

(73) Patentinhaber: **Vianova Kunstharz Aktiengesellschaft, A-8402 Werndorf (AT)**

(72) Erfinder: **Schipfer, Rudolf, Dr., Ernst Haeckelstrasse 53, A-8010 Graz (AT)**
Erfinder: **Schmölzer, Gerhard, Dr., Eisteichgasse 37, A-8010 Graz (AT)**

(74) Vertreter: **Pitter, Robert, Dr., Postfach 191 Leechgasse 21, A-8011 Graz (AT)**

**EP 0 131 127 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft ein Verfahren zur Herstellung verbesserter Härterkomponenten für Lackbindemittel, welche aufgrund ihres Aufbaues durch Umesterung vernetzt werden können.

In der europäischen Patent EP-A1- 00 12 463 werden wärmehärtende Bindemittelzusammensetzungen beschrieben, bei welchen die Vernetzung beim Einbrennen durch Umesterung zwischen den Hydroxylgruppen einer Harzkomponente, welche frei von Säuregruppen und äthylenisch ungesättigten Gruppierungen ist, und einem säuregruppenfreien Polyester mit mehr als einer β-Hydroxygruppe in Gegenwart eines Umesterungskatalysators erfolgt. Soferne die Harzkomponente ein kationisches wasserverdünnbares Harz ist, kann das Bindemittelsystem auch durch Elektrotausch-Lackierung (ETL) appliziert werden.

Die Einführung der für Umesterungsreaktionen besonders geeigneten β-Hydroxyestergruppierung erfolgt gemäß dieser Literaturstelle durch Umsetzung eines Polycarbonsäureanhydrids mit Glykolen, Glykolmonoäthern, Polyolen und/oder vorzugsweise mit Monoepoxiden. Bevorzugt werden als β-Hydroxygruppen tragende Polyester solche aus Trimellithsäureanhydrid und einem Glycidylester von gesättigten aliphatischen Carbonsäuren mit 9 bis 11 C-Atomen, deren Carboxylgruppe an ein tertiäres Kohlenstoffatom gebunden ist (in der Literaturstelle als "Glycidylester C 10 E" bezeichnet) eingesetzt. Bei der Vernetzung dieser Bindemittel werden die als β-Hydroxyester gebundenen Glykole bei Einbrenntemperaturen von 150 bis 200 Grad C abgespalten und aus dem Überzug entfernt. Abgesehen von den - auch bei Verwendung von Umesterungskatalysatoren - notwendigen relativ hohen Einbrenntemperaturen stellt der hohe Anteil an Spaltprodukten einen wesentlichen Nachteil dieser Vernetzungskomponente dar. Überdies müssen dabei hochwertige Lackrohstoffe abgespalten und aus dem Lackfilm entfernt werden, was nicht nur aus wirtschaftlichen sondern auch aus ökologischen Gründen unvorteilhaft ist.

In der AT-B-372 099 werden Vernetzungskomponenten vorgeschlagen, deren Carboxylgruppen mit niederen Alkoholen verestert sind. Die Carboxylgruppen stammen dabei von speziellen Dicarbonsäuren, insbesonders der Malonsäure. Diese Dicarbonsäureester können auch Endglieder von oligomeren oder polymeren Estern darstellen.

Es wurde nun gefunden, daß die Härterfunktion solcher Ester wesentlich verbessert werden kann, wenn die umesterungsfähigen Estergruppen an ein oligomeres oder polymeres unverseifbares Gerüst gebunden sind.

Die vorliegende Erfindung betrifft ein Verfahren zur Herstellung von Vernetzungskomponenten für durch Umesterung vernetzbare Lackbindemittel, welches dadurch gekennzeichnet ist, daß man Verbindungen der Struktur

$X - CH_2 - COOR$, (I)

wobei $X$ = $-COOR$, $-CN$ oder $-COCH_3$ und

$R$ = eine Alkylgruppe mit 1 bis 8 Kohlenstoffatomen darstellt,

mit einer Carbonylverbindung unter Wasserabspaltung im Sinne einer KNOEVENAGEL-Reaktion umsetzt und die entstehende α-disubstituierte Alkylidenverbindung zu einer polymeren Verbindung mit einem Molekulargewicht zwischen 300 und 6000 polymerisiert.

Die erfindungsgemäß hergestellten Vernetzungskomponenten, welche die allgemeine Formel

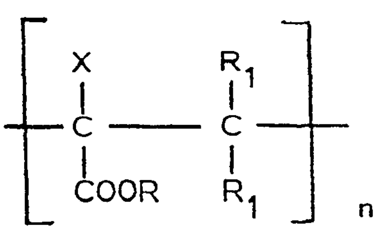

(II)

aufweisen, wobei X und R die für (I) angegebene Bedeutung haben und $R_1$ ein Wasserstoffatom oder einen Alkylrest bedeuten, können zur Vernetzung von durch Umesterung vernetzbaren Bindemittelsystemen verwendet werden, insbesondere solchen, welchen in kathodisch abschiedbaren ET-Lacken zum Einsatz kommen. N ist ein Faktor, welcher die Einheit bis zu einem Molekulargewicht zwischen 300 und 6000 vervielfacht.

Die Reaktionsfolge für das erfindungsgemäße Verfahren kann im Sinne der folgenden Formel angenommen werden:

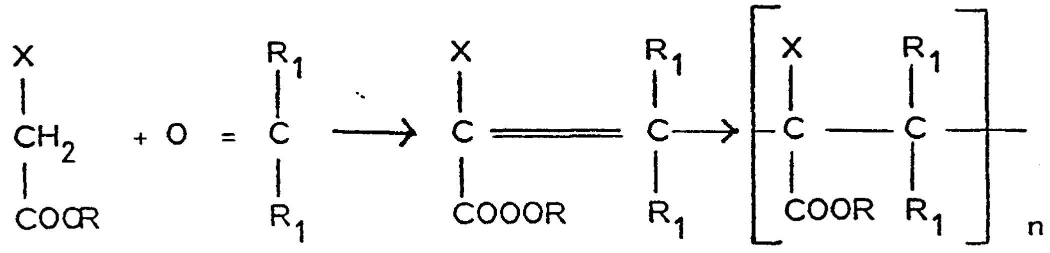

wobei die Indices die oben angegebene Bedeutung haben.

Die erfindungsgemäß hergestellten Härterkomponenten zeigen gegenüber dem Stand der Technik einige wesentliche Verbesserungen. So können nach diesem Aufbauschema oligomere oder polymere Komponenten mit höherer Funktionalität an umesterungsfähigen -COOR-Gruppen aufgebaut werden, als dies bei den Polyestern gemäß AT-B-372 099 möglich ist. Durch die dadurch mögliche Erhöhung der Vernetzungsdichte ergeben sich naturgemäß auch verbesserte Resistenzeigenschaften der Lackfilme. Aufgrund der Reaktionsfolge können für das erfindungsgemäße Verfahren auch "monofunktionelle" Monomerester, wie Acetessigester oder Cyanessigester, eingesetzt werden, da für die Molekülvergrößerung keine Esterfunktion verbraucht wird. Überdies ist die Herstellung der Komponente, d. h. die KNOEVENAGEL-Reaktion und die Polymerisation in einem Zug möglich, wobei als Nebenprodukt der Reaktion nur Wasser entsteht, welches im üblichen Azeotropverfahren entfernt werden kann.

Als Ausgangsmaterialien werden die Diester der Malonsäure mit Alkanolen mit 1 - 8 C-Atomen, vorzugsweise 1 - 4 C-Atomen, wie Dimethylmalonat, Diäthylmalonat, n- oder iso-Propylmalonat eingesetzt. In gleicher Weise können auch die Alkyl- oder Cycloalkylester der Cyanessigsäure, wie Cyanessigsäuremethyl-, äthyl-, propyl-, butyl-, -2-äthyl-hexyl-, cyclopentyl-, cyclohexylester oder der Acetessigsäuremethyl- oder -äthylester eingesetzt werden.

Als Carbonylverbindung wird vorzugsweise Formaldehyd, und zwar insbesondere in seiner polymerisierten Form (Paraformaldehyd) eingesetzt. Die Verwendung höherer Aldehyde, wie Acetaldehyd oder eines Butanals oder eines aromatischen Aldehyds ist zwar möglich, bringt jedoch gegenüber dem preisgünstigen und überall zur Verfügung stehenden Formaldehyd keine Vorteile. Weiters können auch Ketone, z. B. Methylisobutylketon oder Cyclohexanon zum Einsatz gelangen.

Die Herstellung der Härterkomponente erfolgt vorteilhaft in der Weise, daß der Paraformaldehyd bei 60-70 Grad C portionsweise dem Ester zugegeben und in diesem gelöst wird. Als Katalysator für die Reaktion wird dem Ester eine Mischung aus Piperidin und Ameisensäure in einer Menge von etwa 0,1 bis 1 Mol-% zugesetzt. Die Reaktionstemperatur soll bis zur vollständigen Auflösung des Paraformaldehyds 90 Grad C nicht überschreiten. Anschließend wird die Temperatur langsam erhöht und das entstehende Reaktionswasser bei 120-150 Grad C durch azeotrope Destillation mit einem Schleppmittel, z. B. einem aliphatischen oder einem aromatischen Kohlenwasserstoff, aus dem Reaktionsgemisch entfernt. Die Reaktion wird anhand des gebildeten Reaktionswassers verfolgt. Die gleichzeitig ablaufende Polymerisation wird durch Bestimmung des Brechungsindexes oder des Viskositätsverlaufes kontrolliert.

Die Polymerisation kann gegebenenfalls durch Zugabe von peroxidischen Initiatoren vervollständigt werden. Die Härterkomponente kann nach Entfernung des Schleppmittels in weitgehend lösungsmittelfreier Form eingesetzt werden. Gegebenenfalls ist es vorteilhaft, inerte Lösungsmittel zur besseren Handhabung bzw. Verteilung im Basisharz einzusetzen. Die Produkte weisen Molekulargewichte zwischen 300 und 6000 auf.

Als Basisharze können Produkte eingesetzt werden, welche über eine ausreichende Anzahl veresterungsfähiger bzw. amidierungsfähiger Gruppen verfügen, um eine genügende Vernetzung des Lackfilms zu gewährleisten. Harze dieser Art sind in der EP-A-00 12 463 oder in der AT-B-372 099 beschrieben. Bevorzugt werden Harze auf der Basis von Epoxidharzen eingesetzt, wobei insbesonders für die kathodische Abscheidung Epoxidharz-Amin-Addukte, welche gegebenenfalls im Sinne einer inneren Flexibilisierung modifiziert sein können, in Frage kommen.

Die Verarbeitung der Bindemittelsysteme zu wasserverdünnbaren Uberzugsmitteln, d. h. die Neutralisation mit Säure, die Verdünnung auf die Applikationsform oder die in den meisten Fällen erfolgende Einarbeitung von Pigmenten und Füllstoffen, sind dem Fachmann ebenso bekannt, wie die möglichen Applikationsformen. Ein bevorzugter Einsatzbereich der Überzugsmittel, welche die erfindungsgemäße Härterkomponente enthalten, ist das K-ETL-Verfahren, bei welchem das zu beschichtende Werkstück als Kathode geschaltet ist.

Die folgenden Beispiele sollen die Erfindung erklären, ohne daß ihr Umfang dadurch beschränkt wird. Alle Mengenangaben sind, soweit nicht anders angegeben, Gewichtseinheiten und beziehen sich bei den Harzkomponenten auf Festharz.

**Beispiel 1**

Zu einer Mischung aus 160 g (1 Mol) Malonsäurediäthylester, 0,85 g (0,01 Mol) Piperidin und 0,54 g (0,01 Mol) Ameisensäure (85 %) werden bei 70 Grad C 33 g (1 Mol) Paraformaldehyd (91 %) portionsweise in der Weise zugegeben, daß durch die einsetzende exotherme Reaktion die Temperatur nicht über 90 Grad C ansteigt. Das Reaktionsgemisch wird bei 90 Grad C weitergerührt, bis der Paraformaldehyd vollständig gelöst ist. Die Temperatur wird unter einsetzender Wasserabspaltung innerhalb von 2 Stunden auf 140 Grad C erhöht. Nach Erreichen von 140 Grad C werden mit Spezialbenzin (Siedebereich 80 - 120 Grad C) als Schleppmittel insgesamt 24 g Wasser abdestilliert. Unter Anlegen von Vakuum wird anschließend das eingesetzte Schleppmittel abdestilliert und solange eine Temperatur von 120 Grad C gehalten, bis die angegebene Viskosität bzw. der Brechungsindex erreicht sind.

Das erhaltene Produkt weist einen Festköppergehalt (120 Grad C, 30 Minuten) von 97 ± 1 % auf. Die Viskosität nach GARDNER-HOLDT einer Probe aus 9 g Harzlösung und 1 g Athylglykol +) beträgt M. Der Gehalt an freiem Formaldehyd liegt unter 1,5 % und die Bestimmung des Brechungsindex ergibt einen Wert von $n_D^{20}$ = 1,4560. Die Verbindung hat ein mittleres Molekulargewicht von ca. 500. Die Esterfunktionalität beträgt 6 Esteräquivalente pro Mol bzw. 1,17 Esteräquivalente pro 100 g des Produktes. +) = Monoäthylenglykolmonoäthyläther.

**Beispiel 2**

Zu einer Mischung aus 130 g (1 Mol) Acetessigsäureäthylester, 0,85 g (0,01 Mol) Piperidin und 0,54 g (0,01 Mol) Ameisensäure (85 %) werden bei 60 Grad C 33 g (1 Mol) Paraformaldehyd (91 %) in 6 Portionen zugegeben. Vor jeder weiteren Zugabe ist die vollständige Lösung des Paraformaldehyds abzuwarten und die Reaktionstemperatur durch Kühlen unter 90 Grad C zu halten. Das Reaktionsgemisch wird nach Zugabe der gesamten Paraformaldehydmenge bei 90 Grad C gerührt, bis dieser vollständig gelöst ist. Die Temperatur wird unter einsetzender Wasserabspaltung innerhalb von 2 Stunden auf 140 Grad C erhöht. Nach Erreichen von 140 Grad C werden mit Spezialbenzin (Siedebereich 80 - 120 Grad C) als Schleppmittel insgesamt 24 g Wasser abdestilliert. Unter Anlegen von Vakuum wird anschließend das eingesetzte Schleppmittel abdestilliert und solange eine Temperatur von 120 Grad C gehalten, bis die angegebene Viskosität bzw. der Brechungsindex erreicht sind.

Die erhaltene Verbindung weist einen Festkörpergehalt (120 Grad C, 30 Minuten) von 94 ± 1 % auf. Die Viskosität einer Probe aus 9 g Harzlösung und 1 g Athylglykol beträgt E (GH). Der Gehalt an freiem Formaldehyd liegt unter 2 % und die Bestimmung des Brechungsindex ergibt einen Wert von $n_D^{20}$ = 1,4750. Die Verbindung hat ein mittleres Molekulargewicht von 500 (Gelpermeationschromatographie). Die Esterfunktionalität beträgt 3 Esteräquivalente pro Mol bzw. 0,70 Esteräquivalente pro 100 g des Produkts.

**Beispiel 3**

Es wird wie in Beispiel 1 gearbeitet, wobei jedoch vor dem Abdestillieren des Schleppmittels 5,13 g di-tert.Butylperoxid zugegeben wird. Die Temperatur von 120 Grad C wird nach dem Abdestillieren des Schleppmittels gehalten, bis ein Festkörpergehalt von mindestens 98 % erreicht ist. Eine Probe aus 9 g Harzlösung und 1 g Athylglykol hat dann eine Viskosität (GH) von P. Der Brechungsindex $n_D^{20}$ = 1,4610, das Molekulargewicht ca. 940 (Gelpermeationschromatographie).

**Beispiel 4**

Zu einer Mischung aus 113 g (1 Mol) Cyanessigsäureäthylester, 0,085 g (0,001 Mol) Piperidin und 0 054 g (0,001 Mol) Ameisensäure (85 %) werden bei 80 Grad C 33 g (1 Mol) Paraformaldehyd, 91 %, zugegeben. Vor jeder weiteren Zugabe ist die vollständige Lösung des Paraformaldehyds abzuwarten und die Reaktionstemperatur durch Kühlen unter 100 Grad C zu halten. Das Reaktionsgemisch wird nach Zugabe der gesamten Paraformaldehydmenge bei 100 Grad C gerührt, bis dieser vollständig gelöst ist. Die Temperatur wird unter einsetzender Wasserabspaltung innerhalb von einer Stunde auf 120 Grad C erhöht. Nach Erreichen von 120 Grad C werden mit Spezialbenzin (Siedebereich 80 - 120 Grad C) als Schleppmittel insgesamt 22 g Wasser abdestilliert. Unter Anlegen von Vakuum wird anschließend das eingesetzte Schleppmittel abdestilliert und solange bei 120 Grad C gehalten, bis die angegebene Viskosität bzw. der Brechungsindex erreicht sind.

Die erhaltene Verbindung weist einen Festkörpergehalt (120 Grad C, 30 Minuten) von 98 ± 1 % auf. Die Viskosität (GARDNER-HOLDT) einer Probe aus 79 g Harz und 61 g Äthylglykol beträgt U. Der Gehalt von freiem Formaldehyd liegt unter 0,5 % und die Bestimmung des Brechungsindex ergibt einen Wert von $n_D^{20}$ = 1,4615 (70 % in Äthylglykol). Die Verbindung hat ein mittleres Molekulargewicht von 5000

(Gelpermeationschromatographie). Die Esterfunktionalität beträgt 40 Esteräquivalente pro Mol bzw. 0,80 Esteräquivalente pro 100 g des Produkts.

**Beispiel 5**

Zu einer Mischung aus 132 g (1 Mol) Malonsäuredimethylester, 0,17 g (0,002 Mol) Piperidin und 0,11 g (0,002 Mol) Ameisensäure (85 %) werden bei 70 Grad C 33 g (1 Mol) Paraformalcehyd (91 %) portionsweise zugegeben, wobei die Temperatur nicht über 90 Grad C ansteigen soll. Nach vollständiger Lösung des Paraformaldehyds wird die Temperatur auf 110 Grad C gesteigert und mit Spezialbenzin (Siedebereich 80 - 120 Grad C) als Schleppmittel 24 bis 25 g Reaktionswasser abdestilliert. Sobald die Viskosität des Produkts in 80%iger Lösung in Athylglykol den Wert I - J (GARDNER-HOLDT) erreicht hat, wird das Schleppmittel unter Vakuum abdestilliert.

Das erhaltene Produkt weist einen Festkörpergehalt (120 Grad C, 30 Minuten) von 94 % auf und wird mit 14,8 g Äthylglykol auf 85 % verdünnt. Das Produkt weist folgende Kennwerte auf:

Brechungsindex $n_D^{20}$: 1,4659
Freier Formaldehyd: unter 0,5 %
Viskosität (10 g Harzlösung + 1 g Äthylglykol: M (GH)
Mittleres Molekulargewicht: ca. 450
Esterfunktionalität:l,63 Esteräquivalente/ Mol 1 Esteräquivalent / 100 g

**Beispiel 6**

132 g (1 Mol) Malonsäuredimethylester, 0,34 g (0,004 Mol) Piperidin, 0,22 g (0,004 Mol) Ameisensäure, 85 %, und 16,5 g (0,5 Mol) Paraformaldehyd, 91 %, werden in der im Beispiel 5 angegebenen Weise reagiert, bis 10 - 11 g Reaktionswasser abdestilliert und eine Viskosität des Produkts von B - C (GARDNER-HOLDT) erreicht ist.

Kennwerte:
Festkörpergehalt (120 Grad C, 30 Minuten): 88 %
Brechungsindex $n_d^{20}$: 1,4473
Grenzviskositätszahl (Dimethylformamid, 20 Grad C): 1,87 ml/g
Esterfunktionalität: 7,54 Esteräquivalente / Mol 1,64 Esteräquivalente / 100 g

**Beispiel 7**

In gleicher Weise, wie in Beispiel 5 angegeben, werden 328 g (1 Mol) Malonsäuredi-2-äthyl-hexylester, 0,51 g (0,006 Mol) Ameisensäure, 85 % und 33 g Paraformaldehyd 91 % reagiert, bis 17 g Reaktionswasser abdestilliert sind. Nach Abdestillieren des Schleppmittels zeigt das Produkt folgende Kennwerte:

Festkörpergehalt (120 Grad C, 30 Minuten): 95 %
Freier Formaldehyd: unter 0,4 %
Brechungsindex $n_D^{20}$: 1,4535
Mittleres Molekulargewicht (GPC): 850
Esterfunktionalität: 4,9 Esteräquivalente/Mol 0,58 Esteräquivalente/100 g

**Beispiel 8**

In gleicher Weise wie im Beispiel 5, werden 197 g (1 Mol) Cyanessigsäure-2-äthylhexylester, 0,34 9 (0,004 Mol) Piperidin, 0,22 g (0,004 Mol) Ameisensäure, 85 % und 33 g (1 Mol) Paraformaldehyd, 91 %, reagiert, bis 20 g Reaktionswasser abdestilliert sind und eine Viskosität (83,3 % in Äthylglykol) von H (GARDNER-HOLDT) erreicht ist. Nach Abdestillieren des Schleppmittels unter Vakuum zeigt das Produkt folgende Kennwerte:

Festkörpergehalt (120 Grad C, 30 Minuten): 86 %
Stickstoffgehalt (KJELDAHL): 6,4 %
Mittleres Molekulargewicht (GPC): 1080
Esterfunktionalität: 4,5 Esteräquivalente/Mol 0,42 Esteräquivalente/100 g.

**Beispiel 9**

130 g (1 Mol) Acetessigsäureäthylester, 156 g (1 Mol) Isononylaldehyd sowie je 0,002 Mol Piperidin und Ameisensäure werden innerhalb 1 Stunde auf 80 Grad C erwärmt. Nach Einsetzen der Wasserabspaltung wird die Temperatur in 2 Stunden auf 120 Grad C erhöht und mittels Spezialbenzin (Siedebereich 80-120 Grad C) als Schleppmittel 20 g Reaktionswasser abdestilliert. Anschließend wird das Schleppmittel unter Vakuum entfernt.
Kennwerte des Produkts:
Freier Aldehyd (gaschromatogr.): unter 1 %
Viskosität (GARDNER-HOLDT): A
Brechungsindex $n_D^{20}$: 1,4615

**Beispiel 10**

Gemäß der Arbeitsweise von Beispiel 5 werden 160 g (1 Mol) Malonsäurediäthylester, 92 g (0,5 Nol) Methylnonylacetaldehyd und 16,5 g (0,5 Mol) Paraformaldehyd, 91 %, in Gegenwart von je 0,004 Mol Piperidin und Ameisensäure reagiert, bis 17 g Reaktionswasser abgetrennt sind. Nach Entfernen des Schleppmittels unter Vakuum ergibt das Produkt folgende Kennwerte:
Brechungsindex $n_D^{20}$: 1,4322
Viskosität (GARDNER-HOLDT): A
Mittleres Molekulargewicht(GPC): 426
Grenzviskositätszahl (DMF): 2,31 ml/g
Esterfunktionalität: 3,38 Esteräquivalente/Mol 0,79 Esteräquivalente/100 g

**Beispiel 11**

Gemäß der Arbeitsweise von Beispiel 5 werden 160 g (1 Mol) Malonsäurediäthylester, 49 g (0,5 Mol) Cyclohexanon und 165 g (0,5 Mol) Paraformaldehyd, 91 %, in Gegenwart von je 0,004 Mol Piperidin und Ameisensäure reagiert, bis 16,5 g Reaktionswasser abgetrennt sind. Nach Entfernen des Schleppmittels unter Vakuum hat das Produkt folgende Kennwerte:
Brechungsindex $n_D^{20}$: 1,4388
Viskosität (GARDNER-HOLDT): A
Mittleres Molekulargewicht (GPC): 460
Esterfunktionalität: 2,28 Esteräquivalente/Mol 0,495 Esteräquivalente/100 g

Zur Prüfung der erfindungsgemäß hergestellten Härterkomponenten wurden die Produkte im Verhältnis 80 Tle Basisharz: 20 Tle Härterkomponente gemischt und hinsichtlich ihrer Phasenstabilität und der Acetonbeständigkeit des 30 Minuten bei 180 Grad C eingebrannten Films geprüft.

Als Basisharz wurde ein Epoxidaminaddukt eingesetzt, welches wie folgt hergestellt wurde: 190 g eines Bishenoldiglycidyläthers (1 Epoxidäquivalent) und 1425 g Bisphenolglycidyläther (3 Epoxidäquivalente) werden bei 100 Grad C in 597 g Äthylenglykolmonoäthyläther gelöst. Die Lösung wird auf 60 Grad C gekühlt und mit 126 g Diäthanolamin versetzt. Man hält den Ansatz 2 Stunden und steigert die Temperatur langsam auf 80 Grad C. Anschließend werden 169 g N,N-Diäthylpropandiamin-1,3 zugegeben und die Temperatur in 2 Stunden auf 120 Grad C gesteigert. Bei dieser Temperatur werden 478 g Versaticsäureglycidylester zugegeben und anschließend 5 Stunden bei 130 Grad C unter Rühren belassen. Man verdünnt mit Athylenglykolmonoäthyläther auf 65 % Harzgehalt.

Die in TAB 1 angegebenen Prüfungen wurden in folgender Weise durchgeführt:

<u>1. Phasenstabilität</u>: Mit diesem Begriff wird die Stabilität der Materialien in bezug auf Separation der Komponenten nach 10-tägiger Lagerung bei 40 Grad C bezeichnet.

Die Prüfung erfolgt
(a) mit einer Lösung mit 70 ± 0,5 % Festkörpergehalt in Äthylenglykolmonoäthyläther;
(b) mit einer 12%igen wäßrigen Lösung.

<u>Herstellung der Prüflösungen</u>:

(a) 123 Tle Basisharz (65 % Harzfestkörper) werden bei 60 Grad C mit 20 Tlen Härterkomponente (entsprechend den Beispielen) vermischt und 30 Minuten homogenisiert.

(b) 123 Tle Basisharz (65 % Harzfestkörper) werden bei 60 Grad C mit 1,73 Tlen Ameisensäure (85%ige wäßrige Lösung) versetzt und 30 Minuten gerührt. Nach Zugabe von 20 Tlen Härterkomponente wird weitere 60 Minuten hobogenisiert. Durch portionsweises Verdünnung unter guten Rühren mit 689 Tlen deionisiertem Wasser resultiert die 12%ige Prüflösung.

<u>2. Acetonbeständigkeit</u>

Die Acetonbeständigkeit wird durch Auflegen eines mit Aceton getränkten Wattebausches auf einen kathodisch abgeschiedenen, 30 Minuten bei 180 Grad C eingebrannten, pigmentierten Lackfilm geprüft. Es wird die Zeit angegeben, nach welcher der Film durch Kratzen mit dem Fingernagel verletzt werden kann.

TAB 1

| Härter ex Beispiel | Phasenstabilität, 40°C 70%ige Lösung Tage | | Phasenstabilität, 40°C 12%ige Lösung Tage | | Acetonbeständigkeit sek. |
|---|---|---|---|---|---|
| 1 | + | > 10 | + | > 10 | > 200 |
| 2 | + | > 10 | + | > 10 | 150 |
| 3 | + | > 10 | + | > 10 | > 200 |
| 4 | + | > 10 | ± | 5 | 130 |
| 5 | + | > 10 | + | > 10 | > 200 |
| 6 | + | > 10 | + | > 10 | > 200 |
| 7 | ± | 6 | ± | 10 | 150 |
| 8 | + | > 10 | ± | 8 | 160 |
| 9 | + | > 10 | ± | 5 | 130 |
| 10 | ± | 5 | ± | 5 | 130 |
| 11 | ± | 8 | - | 5 | 150 |
| Vergleich+) | - | 6 | - | < 1 | 130 |

+) Beispiel 2 der AT-B-372 099
Bewertung der Phasenstabilität

| | + | - |
|---|---|---|
| 70%ige Lösung | homogene klare. Mischung ohne Phasentrennung | trübe Lösung mit zunehmender Phasentrennung |
| 12%ige Lösung | stabile Emulsion ohne Sedimentbldg. | Sedimentation |

Die Überzugsmittel werden gegebenenfalls nach Einarbeitung der Pigmente und Füllstoffe und/oder Katalysatoren, gegebenenfalls unter Mitverwendung von Hilfslösungsmitteln, mit Wasser auf die Applikationsviskosität verdünnt. Die bei 160 bis 180 Grad C eingebrannten Filme ergeben hinsichtlich ihrer mechanischen Eigenschaften sowie ihrer Widerstandsfähigkeit gegenüber korrosiven Medien ausgezeichnete Prüfergebnisse. Insbesonders bei der kathodischen Abscheidung nach dem ETL-Verfahren lassen sich Grundierungen mit besonders günstigen Eigenschaften herstellen.

**Patentansprüche**

1. Verfahren zur Herstellung von Vernetzungskomponenten für durch Umesterung vernetzbare Lackbindemittel, dadurch gekennzeichnet, daß man Verbindungen der Struktur
$X - CH_2 - COOR$, (I)
wobei X = $-COOR$, $-CN$ oder $-COCH_3$ und
R = eine Alkylgruppe mit 1 bis 8 Kohlenstoffatomen darstellt,
mit einer Carbonylverbindung unter Wasserabspaltung im Sinne einer KNOEVENAGEL-Reaktion umsetzt und

die entstehende α-disubstituierte Alkylidenverbindung zu einer polymeren Verbindung mit einem Molekulargewicht zwischen 300 und 6000 polymerisiert.

2. Verfahren nach Anspruch 1, dadurch gekennzeichnet, daß man als Verbindung (I) Diester der Malonsäure mit Alkanolen mit 1 bis 4 Kohlenstoffatomen einsetzt.

3. Verfahren nach den Ansprüchen 1 und 2, dadurch gekennzeichnet, daß man als Carbonylverbindung Formaldehyd einsetzt.

4. Verfahren nach Anspruch 3, dadurch gekennzeichnet, daß man als Carbonylverbindung Formaldehyd in Form von Paraformaldehyd einsetzt.

5. Verfahren nach einem oder mehreren der Ansprüche 1 bis 4, dadurch gekennzeichnet, daß man die Polymerisation durch peroxidische Initiatoren unterstützt.

## Claims

1. Process for producing crosslinking components for paint binders crosslinkable by transesterification, characterised in that compounds with the structure

$X - CH_2 - COOR$ (1)

wherein X is -COOR, -CN or CO $CH_3$ and

R is an alkyl radical with from 1 to 8 carbon atoms, are reacted with a carbonyl compound with the separation of water in the sense of a KNOEVENAGEL reaction and the resulting α-disubstituted alkylidene compound is polymerised to a polymer compound with a molecular weight of between 300 and 6000.

2. Process according to claim 1, characterised in that as compound (1) diesters of malonic acid with alkanols with from 1 to 4 carbon atoms are used.

3. Process according to claims 1 and 2, characterised in that formaldehyde is used as carbonyl compound.

4. Process according to claim 3, characterised in that formaldehyde is used as paraformaldehyde as the carbonyl compound.

5. Process according to one or more of claims 1 to 4, characterised in that the polymerisation is enhanced with peroxide initiators.

## Revendications

1. Procédé pour la préparation des durcisseurs pour des liants de peintures réticulables par transestérification, caractérisé en ce qu'on réagit des composés ayant la structure

$X - CH_2 - COOR$ (1)

X représentant -COOR, -CN ou CO $CH_3$ et

R représentant une groupe alkoyle avec 1 à 8 atoms de carbone, avec un composé carbonyle sous séparation d'eau au sens d'une réaction KNOEVENAGEL et qu'on polymérise le composé résultant alkoylidène α-substitué donnant un composé polymérique avec un poids moléculaire entre 300 et 6000.

2. Procédé selon la revendication 1, caractérisé en ce qu'on utilise comme composé (1) des diesters d'acide malonique avec des alcanols avec 1 à 4 atoms de carbone.

3. Procédé selon les revendications 1 et 2, caractérisé en ce qu'on utilise le formaldéhyde comme composé carbonyle.

4. Procédé selon la revendication 3, caractérisé en ce qu'on utilise le formaldéhyde sous forme de paraformaldéhyde comme composé carbonyle.

5. Procédé selon l'une quelconque des revendications 1 à 4, caractérisé en ce qu'on supporte la polymérisation avec des initiateurs péroxydiques.